# FASCICULE DE BREVET EUROPEEN

(11) **EP 0 295 687 B1**
(45) Date de publication et mention de la délivrance du brevet: **10.03.1993**
(21) Numéro de dépôt: 88109665.5
(22) Date de dépôt: 16.06.1988
(51) Int. Cl.: G03B 31/02

(54) **Dispositif de lecture et/ou écriture d'une bande auxiliaire d'un film cinématographique, notamment d'une bande de son, et tête d'éclairage pour ce dispositif**
Lese- ond/oder Schreibeinrichtung für eine Zusatzspur eines Kinofilms, insbesondere für eine Tonspur und Beleuchtungsvorrichtung für diese Einrichtung
Reading and/or writing device for the auxiliary track of a cinematographic film, especially for the sound track and illuminating head for this device

(30) Priorité: 19.06.1987 FR 8708618
(43) Date de publication de la demande: 21.12.1988
(73) Titulaire: ALCATEL ALSTHOM COMPAGNIE GENERALE D'ELECTRICITE, 75382 Paris Cédex 08 (FR); Godard, Bruno, F-91940 Les Ulis (FR)
(72) Inventeur: Godard, Bruno, F-91940 Les Ulis (FR)
(74) Mandataire: Weinmiller, Jürgen

(56) Documents cités:
- WO-A-81/01217
- DE-C- 371 528
- US-A- 4 149 781

## Description

La présente invention concerne la projection cinématographique. Un film utilisé pour une telle projection comporte une bande principale qui occupe une fraction majoritaire de sa largeur et sur laquelle se succèdent les images à projeter. Des moyens appropriès le font défiler, image par image, en plaçant la bande principale entre une source lumineuse intense et un objectif. A partir de l'image enregistrée ainsi éclairée, cet objectif forme une image projetée sur un écran. A côté de cette bande principale porteuse d'images, le film comporte au moins une bande d'enregistrement auxiliaire, qui est en pratique une bande son portant un signal sonore, mais qui pourrait tout aussi bien porter un signal auxiliaire d'une autre nature, par exemple un signal d'horloge ou de synchronisation etc...

L'enregistrement sur cette bande est optique, c'est-à-dire que le signal enregistré est représenté par une densité optique. En pratique, à l'heure actuelle, une bande son comporte une fraction médiane de sa largeur qui est transparente et deux fractions opaques qui subsistent symétriquement sur les deux bords. Le signal est constitué par la largeur variable de la fraction médiane transparente.

Pour lire une telle bande on la fait défiler à vitesse constante entre une tête d'éclairage et une cellule photoélectrique qui fournit un signal électrique représentatif du signal sonore à restituer. Un tel signal peut être amplifié et appliqué aux hauts-parleurs d'une salle de cinéma.

La tête d'éclairage éclaire le film en formant une fenêtre de lecture dont la longueur constitue la largeur de la bande auxiliaire et dont la largeur est orientée selon la direction de défilement du film.

L'écriture, c'est-à-dire l'enregistrement du signal auxiliaire, se fait de manière analogue à l'aide d'une tête d'éclairage formant une fenêtre de lecture dont une fraction de la longueur est seule éclairée, cette fraction étant modulée par ce signal.

La bande passante d'un tel dispositif, c'est-à-dire la bande des fréquences qu'il permet de restituer, est d'autant plus petite que la largeur de la fenêtre de lecture est plus grande. Ceci tient aux faits que la vitesse de défilement du film est imposée par ailleurs et que la surface sensible de la cellule photoélectrique présente une largeur plus grande que celle de la fenêtre de lecture précédemment définie, seule cette dernière largeur définissant donc la bande passante. On cherche donc à réduire la largeur de cette fenêtre.

Un premier dispositif connu dans ce but utilise une tête d'éclairage comportant une source lumineuse relativement puissante qui éclaire un diaphragme percé d'une fente. Une image de la fente ainsi éclairée est formée sur le film par un objectif. Elle constitue, dans ce dispositif connu, la fenêtre de lecture précédemment définie.

Ce dispositif connu présente notamment deux inconvénients. Tout d'abord la qualité optique de l'objectif empêche d'obtenir une fenêtre aussi étroite qu'on le voudrait même si la fente percée dans le diaphragme est par elle même suffisamment étroite. Ceci limite la bande passante du dispositif. Ensuite, compte tenu de la sensibilité limitée de la cellule photoélectrique, la source de lumière doit être excessivement puissante parce que seule une petite fraction de sa lumière passe à travers la fente étroite percée dans le diaphragme. Il en résulte une consommation d'énergie et un échauffement qui peuvent être gênants.

Le document de brevet WO-A-81/01217 (Custer et autre) décrit un deuxième dispositif connu conforme au préambule de la revendication 1 de la présente demande.

Le faisceau incident de ce deuxième dispositif connu est un faisceau ultraviolet formé à travers une fente. Il présente donc les inconvénients précédemment indiqués à propos du premier dispositif connu mentionné ci-dessus.

La présente invention a notamment pour but :
- d'augmenter la bande passante d'un dispositif de lecture et/ou écriture d'une bande auxiliaire d'un film cinématographique, notamment d'une bande son, et/ou
- de diminuer la puissance électrique consommée et/ou la puissance calorifique dégagée par un tel dispositif, et/ou
- de permettre un réglage facile d'un tel dispositif, et/ou
- de rendre ce réglage indépendant de la longueur d'onde de la lumière utilisée, et/ou
- de réaliser facilement un tel dispositif au sein d'un appareil cinématographique préexistant par montage dans cet appareil d'une tête d'éclairage peu encombrante et/ou de fabrication simple.

Et elle a pour objet un dispositif de lecture et/ou écriture d'une bande auxiliaire d'un film cinématographique, notamment d'une bande son, selon la revendication 1 ci-après.

Les caractéristiques prévues par cette revendication ont pour effet que tout rayon lumineux provenant de ladite origine ponctuelle et rencontrant le miroir concave de focalisation est réfléchi vers la ligne de lecture. C'est le choix de l'étendue angulaire de ce miroir dans des plans passant par cette ligne de lecture qui assure que le faisceau réfléchi par ce miroir éclaire toute la longueur de la fenêtre de lecture.

De préférence ledit angle d'inclinaison est compris entre cinq et quatre vingt degrés.

De préférence aussi ladite surface de révolution est une surface sphérique de manière qu'elle soit facile à former et que la coïncidence d'un dit axe de révolution avec ladite ligne de lecture soit intrinséquement réalisée par la situation de ladite origine ponctuelle sur cette ligne.

Une tête d'éclairage de fenêtre de lecture est incluse dans un tel dispositif. Elle comporte :
- un bâti de tête d'éclairage,
- ladite source, cette source étant portée par ce bâti,
- ledit miroir de focalisation, ce miroir étant porté par ce bâti,
- et des moyens de fixation du bâti pour fixer ce bâti audit appareil cinématographique, de manière que la position de cette source par rapport à ce miroir soit ajustée avant la fixation de cette tête à ce projecteur.

Cette tête présente une direction longitudinale selon une direction moyenne dudit faisceau de lecture, avec un côté avant et un côté arrière tel que ce faisceau se propage d'arrière en avant, deux directions sensiblement perpendiculaires l'une à l'autre et à cette direction longitudinale étant une direction de défilement destinée à être orientée parallèlement à ladite direction de défilement dudit film, et une direction transversale orientée parallèlement à ladite ligne de lecture.

Et elle présente de plus, de préférence, les dispositions suivantes :
Elle comporte un ensemble avant et un ensemble arrière reliés par ledit bâti, cet ensemble arrière comportant
- ledit miroir de focalisation,
- et ladite source de lumière, cette source étant décalée par rapport à ce miroir selon ladite direction transversale d'un côté qui est un côté d'arrivée de lumière, cette source émettant un faisceau lumineux primaire dirigé vers l'avant,
- et cet ensemble avant comportant un miroir de renvoi recevant ledit faisceau primaire et le réfléchissant vers l'arrière vers ledit miroir de focalisation pour former ledit faisceau incident. Lesdits moyens de fixation du bâti présentent la forme d'une structure de fixation creuse cylindrique ou prismatique dont les génératrices s'étendent selon ladite direction longitudinale, qui appartient audit ensemble avant, et qui entoure localement ledit faisceau de lecture et/ou écriture, de manière que cette structure de fixation puisse fixer le bâti en étant montée coulissante dans une ouverture d'éclairage formée dans une paroi de support qui appartient audit appareil cinématographique, cette ouverture étant prévue pour laisser passer ce faisceau de lecture,
- ledit miroir de renvoi étant décalé par rapport à cette structure selon ladite direction transversale dudit côté d'arrivée de lumière.

La tête comporte en outre des moyens de réglage et de fixation de sa position, ces moyens prenant appui sur ladite paroi de support pour permettre un réglage de la position dudit faisceau de lecture par coulissement de ladite structure de fixation dans ladite ouverture d'éclairage.

Ladite source de lumière est une diode semi-conductrice laser émettant un faisceau primaire d'origine ponctuelle à distance finie, ce faisceau présentant une relativement faible divergence, de l'ordre de 20 degrés, de manière à éviter des pertes d'énergie et/ou un échauffement nuisible.

La présente invention s'applique évidemment aussi bien au cas où le signal auxiliaire précédemment mentionné est analogique qu'à celui où il est numérique.

A l'aide des figures schématiques ci-jointes on va décrire plus particulièrement ci-après, à titre d'exemple non limitatif, comment la présente invention peut être mise en oeuvre dans le cadre de l'exposé qui en à été donné ci-dessus. Lorsqu'un même élément est représenté sur plusieurs figures il y est désigné par le même signe de référence. Il doit être compris que les éléments mentionnés peuvent être remplacés par d'autres éléments assurant les mêmes fonctions techniques.

Le mode de réalisation décrit concerne un dispositif de lecture seulement monté dans un projecteur qui constitue l'appareil cinématographique précédemment mentionné. Il présente l'ensemble des dispositions mentionnées ci-dessus à propos des objets de l'invention.

La figure 1 représente une vue partielle de côté d'un projecteur cinématographique qui est muni d'un dispositif selon l' invention et dont une paroi latérale a été enlevée pour permettre de voir le film et ce dispositif.

La figure 2 représente une vue partielle de dessus de ce projecteur en coupe par un plan horizontal II-II de la figure 4.

La figure 3 représente un détail III de la figure 2 à échelle agrandie.

La figure 4 représente une vue partielle de côté de ce projecteur en coupe par un plan vertical IV-IV de la figure 2.

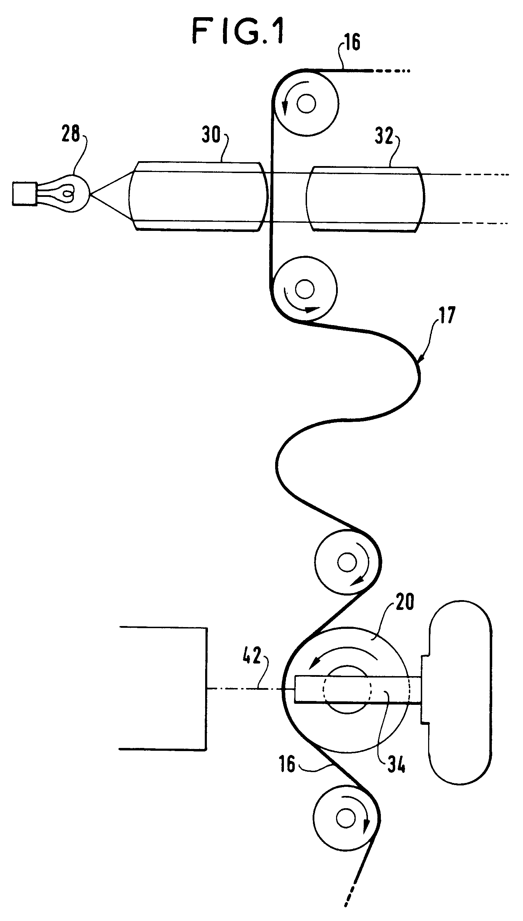

Conformément à la figure 1 un projecteur cinématographique permet la projection d'un film 16 qui est déroulé à partir d'une bobine d'entrée non représentée et qui se réenroule sur une bobine de sortie également non représentée. Le projecteur assure simultanémeent deux fonctions. Il projette des images sur un écran et il fournit à des amplificateurs et à des hauts-parleurs deux signaux électriques représentatifs d'un son stéréophonique. Le film comporte pour cela une bande principale pour les images et deux bandes auxiliaires sur un même côté de la bande principale pour le son. Pour simplifier l'exposé on considérera ci-après qu'il y a une seule telle bande appelée bande son.

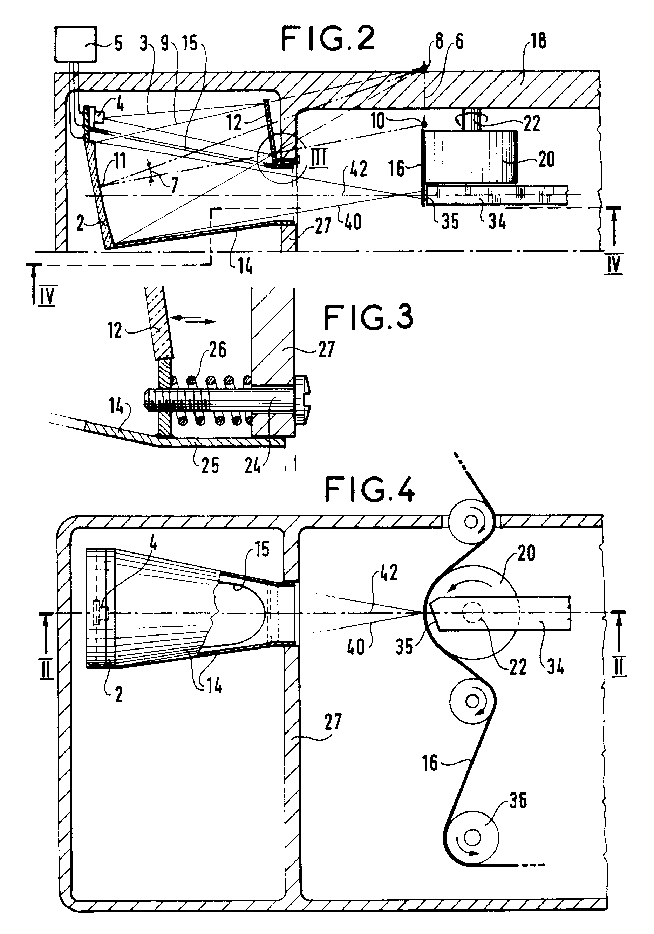

Le film passe d'abord devant une puissante lampe de projection 28 qui en éclaire une image par l'intermédiaire d'un condenseur 30. La lumière transmise à travers cette image enregistrée est projetée par un objectif 32 sur un écran de projection non représenté. Le film est entraîné de manière discontinue, image par image, par un dispositif d'entraînement non représenté. Il forme ensuite une boucle de longueur cycliquement variable 17 lui permettant d'être entraîné ensuite de manière continue sur un tambour de lecture 20 par un galet de reprise 36 (fig.4), ceci pour permettre la lecture de la bande son. A cet effet le tambour 20, qui tourne autour d'un axe 22 parallèle à ladite direction transversale, présente selon cette direction une largeur inférieure à celle du film de manière à ne pas empêcher la lumière de passer à travers la bande son.

D'un côté longitudinalement avant du film, à proximité immédiate de celui-ci et du tambour 20, en regard de la bande son, se trouve une cellule photoélectrique 34 présentant une surface sensible 35 pour recevoir la fraction d'une lumière d'éclairage qui a traversé cette bande son, et pour fournir en réponse ledit signal de lecture. Ce signal est représentatif du son qui correspond aux images projetées au même instant.

La lumière d'éclairage en question est dirigée sur le film sous la forme d'un faisceau de lecture 40, par une tête d'éclairage amovible comportant un bâti 14 dont la forme générale est celle d'un tronc de cône de révolution creux à axe longitudinal 42 confondu avec celui du faisceau 40. Ce bâti épouse à peu près la forme du faisceau de lecture 40 dans sa partie arrière intérieure à ce bâti. Il se prolonge vers l'avant à partir de sa petite base, par une courte structure de fixation tubulaire à génératrices longitudinale 25 qui coulisse à frottement doux dans une ouverture d'éclairage circulaire. Cette ouverture est formée dans une paroi de support épaisse 27 faisant partie du bâti principal du projecteur. Elle est en face de la cellule photoélectrique 34. Des moyens de fixation et de réglage de la position du bâti sont prévus. Ils sont représentés symboliquement sur la figure 3 sous la forme d'une vis 24 dont la tête s'appuie sur la face avant de la paroi 27 et dont le fût traverse cette paroi et vient se visser dans un filetage solidaire du bâti 14. Le jeu est rattrapé par un ressort de rappel 26 entourant ce fût et comprimé entre la face arrière de la paroi 27 et ce bâti.

La lumière d'éclairage est monochromatique et cohérente. Elle est émise, sous la forme d'un faisceau primaire 3 de longueur d'onde 0,78 micromètre par exemple, par une diode laser 4 qui est portée à l'arrière du bâti 14 et fait partie de l'ensemble arrière précédemment mentionné 2, 4. Cette diode est alimentée et régulée à partir d'un boîtier 5. Elle serait modulée à partir de ce même boîtier dans le cas d'un dispositif d'écriture. Elle est montée de manière à pouvoir subir un ajustement de position. Elle fournit un faisceau à faible divergence à origine sensiblement ponctuelle. Ce faisceau est dirigé vers l'avant et réfléchi par un miroir de renvoi plan 12 porté à l'avant du bâti 14 pour former le faisceau incident 9 précédemment mentionné. Ce miroir est disposé de manière que l'origine ponctuelle virtuelle 8 de ce faisceau incident soit, éventuellement après ajustement de la position de la diode 4, située sur une ligne de lecture 6 alignée selon une génératrice du tambour 20 en regard de la surface sensible 35 de la cellule 34. Le résultat recherché et obtenu est que cette ligne de lecture soit le prolongement d'une ligne transversale du tronçon du film dont la bande principale est en appui sur le tambour 20. La partie de cette ligne qui s'étend sur la largeur de la bande son constitue la fenêtre de lecture allongée précédemment mentionnée.

La forme plane du miroir de renvoi présente l'avantage de former une image virtuelle ponctuelle sans aberration, tout en étant d'une réalisation simple et d'un coût faible.

La position de la fenêtre de lecture est bien entendue ajustée non pas exactement sur une génératrice de la surface cylindrique du tambour de lecture 20 mais sur la face impressionnée du film 16.

Quoique le faisceau incident ainsi constitué ait une origine ponctuelle à distance finie, il doit être compris que l'on pourrait aussi utiliser, dans le cadre de la présente invention, un faisceau incident dont l'origine ponctuelle serait située encore sur la même ligne de lecture, mais à distance infinie, c'est-à-dire que ce faisceau incident serait un faisceau parallèle dont la direction serait celle de cette ligne de lecture.

Le faisceau de lecture 40 est formé à partir du faisceau incident 9 par réflexion sur un miroir de focalisation 2 qui est porté à l'arrière du bâti 14. Le passage du faisceau incident est permis par une large ouverture 15 formée à cet effet dans la paroi tronconique du bâti 14. Le miroir 2, ou plus exactement sa surface réfléchissante, constitue une partie d'une surface sphérique dont le centre 10 est situé sur la ligne de lecture 6 à peu près au milieu entre la source virtuelle 8 et le milieu de la largeur de la bande son du film 16. Ce centre 10 constitue le centre de courbure du miroir 2.

Quoique, dans le cadre de la présente invention, l'utilisation d'un telle surface sphérique apparaisse souvent avantageuse pour des raisons de simplicité de fabrication, il doit être compris que l'essentiel est seulement que le miroir de focalisation fasse partie d'une surface de révolution autour de la ligne de lecture. Ceci assure que tout rayon lumineux incident assimilable à une droite passant par la source ponctuelle 8 est réfléchi par le miroir de focalisation selon un rayon passant exactement par cette ligne de lecture. Ceci rend théoriquement nulle la largeur de la fenêtre de lecture formée sur le film par le tels rayons, cette largeur étant mesurée selon la direction de défilement du film.

Ceci est vrai dans l'optique géométrique étant entendu qu'en fait les phénomènes de diffraction et l'étendue de la source donnent à cette largeur une valeur qui peut être supérieure à la longueur d'onde de la lumière utilisée, mais qui est beaucoup plus faible que dans les dispositifs connus pour la même puissance d'éclairage.

La bande son doit être cependant éclairée sur toute sa largeur. Ceci est obtenu notamment grâce à un choix convenable de l'angle d'inclinaison moyen précédemment mentionné. Cet angle 7 peut être par exemple mesuré à partir du centre 11 du miroir 2. Il s'étend entre les directions allant de ce centre vers la source ponctuelle 8 et vers le centre de courbure 10. Il vaut par exemple 10 degrés, l'étendue angulaire du faisceau incident valant par exemple 20 degrés.

Les avantages du dispositif décrit tiennent notamment au fait que pratiquement toute l'énergie lumineuse émise par la diode 4 se retrouve dans une fenêtre de lecture extrêmement étroite. Cependant une petite partie de cette énergie peut être perdue avec avantage en donnant à la surface réfléchisssante du miroir 2 ou du miroir 12 une forme rectangulaire à bords concave ou autre de manière à uniformiser l'éclairement de la fenêtre de lecture. On pourraît tout aussi bien utiliser un diaphragme à cet effet.

## Revendications

1. Dispositif de lecture et/ou écriture d'une bande auxiliaire d'un film cinématographique, notamment d'une bande son, ce dispositif étant destiné à fournir au moins un signal de lecture mesurant une densité optique moyenne sur au moins une fenêtre de lecture qui est allongée selon une ligne de lecture, et/ou à inscrire une telle densité de manière à permettre l'élaboration d'un tel signal de lecture lors d'une lecture ultérieure, cette ligne de lecture étant une ligne transversale d'un film (16) qui défile selon une direction de défilement, la longueur de cette fenêtre de lecture couvrant au moins partiellement la largeur d'une bande d'enregistrement auxiliaire inscrite sur ce film pour enregistrer un signal auxiliaire, de manière que ce signal de lecture ou cette densité inscrite représentent ce signal auxiliaire, une largeur de cette fenêtre limitant la bande passante en fréquences du dispositif,
- ce dispositif comportant pour cela
- une source de lumière (4) pour former un faisceau incident (9) dirigé vers un miroir, ledit faisceau incident présentant une origine au moins virtuelle ponctuelle (8),
- un système optique comportant ce miroir, qui constitue un miroir concave de focalisation, pour transformer ce faisceau incident en un faisceau de lecture et/ou écriture (40) focalisé sur ladite fenêtre de lecture ;
- et un transducteur tel qu'une cellule photosensible (34) de lecture recevant la lumière qui est transmise ou renvoyée par ce film en réponse à ce faisceau de lecture, cette cellule fournissant ledit signal de lecture en réponse à cette lumière, et/ou un modulateur modulant ledit faisceau d'écriture en réponse au signal auxiliaire à inscrire,
- ce dispositif étant caractérisé par le fait que ladite origine ponctuelle (8) du faisceau incident est disposée sur ladite ligne de lecture (6),
- et par le fait que la surface dudit miroir concave de focalisation (2) est une partie d'une surface de révolution autour d'un axe coïncidant avec cette ligne de lecture (6), la normale (10-11) en un point central (11) de ce miroir formant un angle d'inclinaison (7) avec un axe central (8-11) dudit faisceau incident (9), cet angle d'inclinaison et l'étendue angulaire de ce miroir étant choisis pour que le faisceau réfléchi par ce miroir éclaire toute la longueur de la fenêtre de lecture.

2. Dispositif selon la revendication 1 dans lequel ledit angle d'inclinaison (7) est compris entre cinq et quatre-vingt degrés.

3. Dispositif selon l'une quelconque des revendications 1 ou 2, caractérisé par le fait que ladite surface de révolution (2) est une surface sphérique.

4. Dispositif selon la revendication 1, caractérisé en ce qu'il comporte un bâti de tête d'éclairage (14), portant ladite source de lumière (4) et ledit miroir de focalisation (2), ce bâti et les éléments qu'il porte constituant une tête d'éclairage, des moyens de fixation (25) du bâti étant prévus pour fixer ce bâti à un appareil cinématographique, de manière que la position de cette source de lumière par rapport à ce miroir de focalisation soit ajustée avant la fixation de cette tête à cet appareil cinématographique.

5. Dispositif selon la revendication 4, ladite tête présentant une direction longitudinale selon une axe central (42) dudit faisceau de lecture, avec un côté arrière par rapport au sens de propagation de ce fascieau, deux directions sensiblement perpendiculaires l'une à l'autre et à cette direction longitudinale, lesdites directions etant respectivement une direction de défilement destinée à être orientée parallèlement à ladite direction de défilement dudit film, et une direction transversale orientée parallèlement à ladite ligne de lecture (6),
- ce dispositif étant caractérisé par le fait que cette tête comporte un ensemble avant (25, 12) et un ensemble arrière (2, 4) reliés par ledit bâti (14), cet ensemble arrière comportant
- ledit miroir de focalisation (2),
- et ladite source de lumière (4), cette source étant décalée par rapport à ce miroir selon ladite direction transversale d'un côté qui est un côté d'arrivée de lumière, cette source émettant un faisceau lumineux primaire (3) dirigé vers le film,
- et cet ensemble avant comportant un miroir de renvoi (12) recevant ledit faisceau primaire et le réfléchissant vers l'arrière vers ledit miroir de focalisation (2) pour former ledit faisceau incident (9).

6. Dispositif selon la revendication 5, caractérisé par le fait que lesdits moyens de fixation du bâti présentent la forme d'une structure de fixation creuse cylindrique ou prismatique (25) dont les génératrices s'étendent selon ladite direction longitudinale, qui appartient audit ensemble avant (25, 12), et qui entoure localement ledit faisceau de lecture et/ou écriture (40), de manière que cette structure de fixation (25) puisse fixer le bâti (14) en étant montée coulissante dans une ouverture d'éclairage formée dans une paroi d'un support (27) qui appartient audit appareil cinématographique, cette ouverture étant prévue pour laisser passer ce faisceau de lecture,
- ledit miroir de renvoi (12) étant décalé par rapport à cette structure selon ladite direction transversale dudit côté d'arrivée de lumière.

7. Dispositif selon la revendication 6, caractérisé par le fait qu'il comporte en outre des moyens (24, 26) de réglage et de fixation de sa position, ces moyens prenant appui sur ladite paroi de support (27) pour permettre un réglage de la position dudit faisceau de lecture (40) par coulissement de ladite structure de fixation (25) dans ladite ouverture d'éclairage.

8. Dispositif selon la revendication 7, caractérisé par le fait que lesdits moyens de réglage longitudinal comportent une vis (24) et un ressort de rappel (26).

9. Dispositif selon la revendication 4, caractérisé par le fait que ladite source de lumière est une diode semi-conductrice laser (4) émettant un faisceau primaire (3) dont ladite origine ponctuelle est située à distance finie.

10. Dispositif selon la revendication 5, caractérisé par le fait que ledit miroir de renvoi (12) est un miroir plan.

11. Dispositif selon la revendication 4, caractérisé par le fait que ladite source de lumière (4) est montée de manière à permettre, au moins en usine, un ajustement de sa position par rapport audit bâti (14).

## Claims

1. A read and/or write device for use with an auxiliary track of a motion picture film, said device being intended to provide at least one read signal representative of an average optical density over at least one read window which is elongate along a read line, and/or to write such a density so as to enable such a read signal to be generated during subsequent reading, said line being a line transversal to a film (16) which runs along a run direction, the length of said read window covering, at least in part, the width of an auxiliary recording track written on said film to record an auxiliary signal such that said read signal or said written density represents said auxiliary signal, a width of said window being limited to the frequency passband of the device;
- said device comprising for this purpose:
- a light source (4) for forming an incident light beam (9) directed to a mirror, said incident beam having an at least virtual point origin (8);
- an optical system comprising said mirror, which constitutes a concave focusing mirror in order to transform said incident beam into a read and/or write beam (40) focused on said read window; and
- a transducer, such as a light sensitive read cell (34) receiving the light which is transmitted or returned by said film in reply to said read beam, with said cell providing said read signal in reply to said light; and/or a modulator adapted to modulate said write beam in reply to the auxiliary signal to be recorded;
- said device being characterized in that said point origin (8) of the incident beam is disposed on said read line (6);
- and in that the surface of said concave focusing mirror (2) forms a part of a surface of revolution around an axis which coincides with said read line (6), with the normal (10-11) to a central point (11) of said mirror forming an angle of inclination (7) with a central axis (8-11) of said incident beam (9), said angle of inclination and the angular extent of said mirror being selected such that the beam reflected by said mirror illuminates the entire length of the read window.

2. A device according to claim 1, wherein said mean angle of inclination (7) lies between 5° and 80°.

3. A device according to claim 1 or 2, characterized in that said surface of revolution (2) is a spherical surface.

4. A device according to claim 1, characterized in that it comprises an illumination head frame (14) carrying a light source (4) and said focusing mirror (2), said frame together with the elements carried by said frame constituting an illumination head, with the fixing means (25) of the frame being provided for fixing the frame to a motion picture apparatus in such a manner that the position of said light source relative to said focusing mirror is adjusted prior to fixing said head to said motion picture apparatus.

5. A head according to claim 4, said head having a longitudinal direction along a central axis (42) of said read beam, with a rear end relative to the direction of propagation of the beam, and having two directions substantially perpendicular to each other and to said longitudinal direction, said directions being respectively a running direction intended to be oriented parallel to said running direction of said film, and a transverse direction oriented parallel to said read line (6),
- said device being characterized in that said head comprises a front assembly (25, 12) and a rear assembly (2, 4) interconnected by said frame (14), said rear assembly comprising:
- said focusing mirror (2); and
- said light source (4), said source being offset relative to said mirror along said transverse direction towards a side which is a light arrival side, said source emitting a primary light beam (3), which is directed towards the film; and said front assembly comprising a mirror (12) receiving said primary beam and reflecting it rearwardly towards said focusing mirror (2) in order to form said incident beam (9).

6. A head according to claim 5, characterized in that said frame fixing means are in the form of a hollow cylindrical or prismatic fixing structure (25) having generator lines extending along said longitudinal direction, said fixing means belonging to said front assembly (25, 12) and locally surrounding said read and/or write beam (40), thereby enabling said frame (14) to be fixed by said fixing structure (25) in a sliding mount in an illumination opening formed in a support wall (27) belonging to said motion picture apparatus, said opening being provided to pass said read beam;
- with said mirror (12) being offset relative to said structure along said transverse direction towards said light arrival side.

7. A read head according to claim 6, characterized in that it comprises in addition means (24, 26) for adjusting and fixing its position, said means bearing against said supporting wall (27) in order to enable the position of said read beam (40) to be adjusted by sliding said fixing structure (25) in said illumination opening.

8. A head according to claim 7, characterized in that said longitudinal adjustment means comprise a screw (24) and a return spring (26).

9. A head according to claim 4, characterized in that said light source is a semiconductor laser diode (4) emitting a primary beam (3) having a point origin at finite distance.

10. A head according to claim 5, characterized in that said mirror (12) is a plane mirror.

11. A head according to claim 4, characterized in that said light source (4) is mounted in such a manner as to make it possible, at least in the factory, to adjust its position relative to said frame (14).

## Patentansprüche

1. Lese- und/oder Schreibeinrichtung für eine Hilfsspur eines Kinofilms, insbesondere eine Tonspur, wobei die Einrichtung dazu bestimmt ist, mindestens ein Lesesignal zu liefern, das eine mittlere optische Dichte in mindestens einem Lesefenster mißt, das sich entlang einer Leselinie erstreckt, und/oder eine solche Dichte so aufzuzeichnen, daß die Erzeugung eines solchen Lesesignals während einer späteren Ablesung möglich ist, wobei die Leselinie eine Querlinie eines Films (16) ist, der in einer Ablaufrichtung vorbeiläuft, wobei die Länge dieses Lesefensters mindestens teilweise die Breite einer Hilfsaufnahmespur einnimmt, die zur Aufnahme eines Hilfssignals auf dem Film aufgenommen ist, derart, daß das Lesesignal bzw. die aufgezeichnete Dichte das Hilfssignal darstellt, wobei eine Breite dieses Fensters das Durchlaßfrequenzband der Einrichtung begrenzt,
- wobei die Einrichtung hierzu aufweist:
- eine Lichtquelle (4) zur Erzeugung eines auf einen Spiegel gerichteten einfallenden Strahls (9), der einen mindestens virtuellen punktuellen Ursprung (8) hat,
- ein optisches System mit dem genannten Spiegel, der ein konkaver Fokussierungsspiegel zur Umwandlung des einfallenden Strahls in einen Lese- und/oder Schreibstrahl (40) ist, welcher auf das Lesefenster fokussiert ist, und
- einen Wandler, wie etwa eine lichtempfindliche Lesezelle (34) zum Empfangen des Lichtes, das vom Film aufgrund des Lesestrahls durchgelassen bzw. reflektiert wurde, wobei diese Zelle das Lesesignal als Antwort auf dieses Licht liefert, und/oder wobei ein Modulator den Schreibstrahl gemäß dem einzuschreibenden Hilfssignal moduliert,
- wobei die Einrichtung dadurch gekennzeichnet ist, daß der Ursprungspunkt (8) des einfallenden Strahls auf der Leselinie (6) liegt, und
- die Oberfläche des konkaven Fokussierungsspiegels (2) Teil einer um eine Achse drehsymmetrischen Oberfläche ist, wobei die Achse mit dieser Leselinie (6) zusammenfällt, wobei die Normale (10-11) in einem Mittelpunkt (11) des Spiegels einen Neigungswinkel (7) mit einer zentralen Achse (8-11) des einfallenden Strahls (9) einschließt und der Neigungswinkel und die winkelmäßige Ausdehnung des Spiegels so gewählt sind, daß der vom Spiegel reflektierte Strahl die gesamte Länge des Lesefensters beleuchtet.

2. Einrichtung nach Anspruch 1, in der Neigungswinkel (7) zwischen 5 und 80° liegt.

3. Einrichtung nach Anspruch 1 oder 2, dadurch gekennzeichnet, daß die drehsymmetrische Oberfläche (2) eine sphärische Oberfläche ist.

4. Einrichtung nach Anspruch 1, dadurch gekennzeichnet, daß sie einen Beleuchtungskopfhalter (14) aufweist, der die Lichtquelle (4) und den Fokussierungsspiegel (2) trägt, wobei der Halter und die von ihm getragenen Elemente den Beleuchtungskopf bilden und wobei Befestigungsmittel (25) des Halters vorgesehen sind, um den Halter an einem Filmgerät zu befestigen, derart, daß die Position der Lichtquelle relativ zum Fokussierungsspiegel vor der Befestigung dieses Kopfes am Filmgerät justiert wird.

5. Einrichtung nach Anspruch 4, bei der der Kopf eine Längsrichtung entlang einer zentralen Achse (42) des Lesestrahls, mit einer hinteren Seite relativ zur Fortpflanzungsrichtung des Strahls und zwei im wesentlichen senkrecht zueinander und zur Längsrichtung verlaufende Richtungen definiert, wobei die genannten Richtungen aus einer Laufrichtung, die parallel zur Filmlaufrichtung verläuft, bzw. einer Querrichtung bestehen, die parallel zur Leselinie (6) verläuft,
- wobei die Einrichtung dadurch gekennzeichnet ist, daß der Kopf eine vordere Baugruppe (25, 12) und eine hintere Baugruppe (2, 4) aufweist, die mit dem Halter (14) verbunden sind, wobei die hintere Baugruppe umfaßt:
- den Fokussierungsspiegel (2), und
- die Lichtquelle (4), wobei die Quelle relativ zu diesem Spiegel in der Querrichtung auf einer Seite versetzt ist, die eine Ankunftsseite des Lichtes bildet, und wobei die Quelle einen auf den Film gerichteten primären Lichtstrahl (3) aussendet,
- während die vordere Baugruppe einen Spiegel (12) enthält, der den primären Lichtstrahl empfängt und ihn nach hinten zum Fokussierungsspiegel (2) reflektiert, um den einfallenden Strahl (9) zu bilden.

6. Einrichtung nach Anspruch 5, dadurch gekennzeichnet, daß die Befestigungsmittel des Halters die Form einer hohlen, zylindrischen oder prismatischen Befestigungsstruktur (25) besitzen, deren Erzeugende sich in der Längsrichtung erstrecken und die der vorderen Baugruppe (25, 12) angehört und örtlich den Lese- und/oder Schreibstrahl (40) umgibt, derart, daß die Befestigungsstruktur (25) den Halter (1) verschiebbar in einer in einer Stützwand (27) angebrachten Beleuchtungsöffnung befestigen kann, die zum Filmgerät gehört, wobei diese Öffnung für den Durchtritt des Lesestrahls vorgesehen ist, und wobei der Spiegel (12) relativ zu dieser Struktur in Querrichtung der Ankunftsseite des Lichtes versetzt ist.

7. Einrichtung nach Anspruch 6, dadurch gekennzeichnet, daß sie weiter Mittel (24, 26) zum Justieren und Befestigen seiner Position umfaßt, wobei sich die Mittel auf der Stützwand (27) abstützen, um ein Justieren der Position des Lesestrahls (40) durch Verschieben der Befestigungsstruktur (25) in der Beleuchtungsöffnung zu ermöglichen.

8. Einrichtung nach Anspruch 7, dadurch gekennzeichnet, daß die Mittel zur Längseinstellung eine Schraube (24) und eine Feder (26) aufweisen.

9. Einrichtung nach Anspruch 4, dadurch gekennzeichnet, daß die Lichtquelle eine Halbleiterlaserdiode (4) ist, die einen primären Strahl (3) aussendet, dessen punktförmiger Ursprung in einem endlichen Abstand gelegen ist.

10. Einrichtung nach Anspruch 5, dadurch gekennzeichnet, daß der Spiegel (12) ein ebener Spiegel ist.

11. Einrichtung nach Anspruch 4, dadurch gekennzeichnet, daß die Lichtquelle (4) so montiert ist, daß sie, zumindestens beim Hersteller, eine Justierung ihrer Position relativ zum Halter (14) ermöglicht.
